# EUROPÄISCHE PATENTSCHRIFT

(11) **EP 3 693 220 B1**
(45) Veröffentlichungstag und Bekanntmachung des Hinweises auf die Patenterteilung: **07.07.2021**
(21) Anmeldenummer: 19213026.8
(22) Anmeldetag: 02.12.2019
(51) Int. Cl.: B60Q 1/50, B60Q 1/52, B60Q 1/38, B60Q 1/28

(54) **VERFAHREN ZUM BETRIEB EINES SELBSTFAHRENDEN KRAFTFAHRZEUGS**
METHOD FOR OPERATING A SELF-DRIVING MOTOR VEHICLE
PROCÉDÉ D'OPÉRATION D'UN VÉHICULE AUTOMOBILE AUTONOME

(30) Priorität: 08.02.2019 DE 102019201666
(43) Veröffentlichungstag der Anmeldung: 12.08.2020
(73) Patentinhaber: Ford Global Technologies, LLC, Dearborn, MI 48126 (US)
(72) Erfinder: Sawonski, Anette, 53721 Siegburg (DE)
(74) Vertreter: Markowitz, Markus

(56) Entgegenhaltungen:
- DE-A1-102014 207 399
- DE-A1-102016 204 877
- DE-A1-102017 200 781
- DE-U1-202017 103 902
- DE-U1-202018 004 776
- US-A1- 2015 258 928

## Beschreibung

Die Erfindung betrifft ein Verfahren zum Betrieb eines selbstfahrenden Kraftfahrzeugs.

Selbstfahrende Kraftfahrzeuge (manchmal auch autonome Landfahrzeuge genannt) sind Kraftfahrzeuge, die ohne Einflussnahme eines menschlichen Fahrers fahren, steuern und einparken können (hochautomatisiertes Fahren bzw. autonomes Fahren). Im Falle, dass keinerlei manuelles Steuern seitens eines Fahrers nötig ist, wird auch der Begriff Roboterauto verwendet. Der Fahrersitz kann unbesetzt bleiben; eventuell sind kein Lenkrad, Brems- und Fahrpedal vorhanden.

Selbstfahrende Kraftfahrzeuge können mit Hilfe verschiedener Sensoren ihre Umgebung erfassen und aus den gewonnenen Informationen ihre Position und die anderer Verkehrsteilnehmer bestimmen, in Zusammenarbeit mit einer Navigationssoftware ein Fahrziel ansteuern und Kollisionen auf dem Weg dahin vermeiden.

Derartige selbstfahrende Kraftfahrzeuge müssen mit ihrer Umgebung, insbesondere mit anderen Verkehrsteilnehmern, wie z.B. Fußgängern, kommunizieren können. Hierzu ist z.B. aus der WO 2018 / 021063 A1 ist ein Beleuchtungssystem für ein selbstfahrendes Kraftfahrzeug bekannt, das auf ein Erfassen eines Verkehrsteilnehmers hin Lichtparameter verändert um so den Fußgänger darüber zu informieren, dass er vom selbstfahrenden Kraftfahrzeug erfasst wurde.

Jedoch werden keine Informationen darüber bereitgestellt, in welche Richtung das selbstfahrende Kraftfahrzeug seine Fahrt fortsetzen wird.

Aus der DE 10 2013 214 481 A1 ist eine Halteanzeigevorrichtung bekannt, die dazu ausgebildet ist, eine Anhalteabsicht eines ersten Verkehrsteilnehmers anzuzeigen, mit einer Straßenabschnitterfassungseinrichtung, die dazu ausgebildet ist, zu erfassen, dass ein zweiter Verkehrsteilnehmer einen Straßenabschnitt passieren möchte, den auch der erste Verkehrsteilnehmer passieren möchte; eine Vorrechtermittlungseinrichtung, die dazu ausgebildet ist, zu ermitteln, dass der zweite Verkehrsteilnehmer den Straßenabschnitt bevorrechtigt passieren darf; eine Hinweisausgabeeinrichtung, die dazu ausgebildet ist, einen Hinweises an den zweiten Verkehrsteilnehmer auszugeben, dass der erste Verkehrsteilnehmer erkannt hat, dass der zweite Verkehrsteilnehmer den Straßenabschnitt bevorrechtigt passieren darf, und dass der erste Verkehrsteilnehmer anhält, damit der zweite Verkehrsteilnehmer den Straßenabschnitt zuerst passieren kann.

Aus der DE 10 2014 016 334 A1 ist eine Beleuchtungsvorrichtung für eine Außenlichtfunktion eines Kraftfahrzeugs mit einer Vielzahl von Segmenten bekannt, die jeweils mindestens ein Halbleiterlichtquellenelement aufweisen, sowie mit einer Steuervorrichtung zum Ansteuern der Vielzahl von Halbleiterlichtquellenelementen, wobei die Steuervorrichtung dazu ausgelegt ist, in Abhängigkeit eines durch das Kraftfahrzeug bereitgestellten aktuellen Werts eines Kraftfahrzeugparameters gemäß einer vorgebbaren Kennlinie mindestens einen Betriebsparameter der Beleuchtungsvorrichtung zu verändern.

Aus der DE 10 2014 226 254 A1_ist ein Verfahren zum Betreiben einer Signalisierungsvorrichtung eines insbesondere autonom oder teilautonom fahrenden/fahrbaren Kraftfahrzeugs bekannt, die wenigstens ein Signalisierungsmittel aufweist, das von außerhalb des Kraftfahrzeugs durch andere Verkehrsteilnehmer wahrnehmbar ist. Mittels einer Umfeldsensorik wird das Umfeld des Kraftfahrzeugs auf andere Verkehrsteilnehmer überwacht und in Abhängigkeit von einem erfassten Verkehrsteilnehmer wird die Signalisierungsvorrichtung angesteuert, um dem erfassten Verkehrsteilnehmer eine Information über ein weiteres Verhalten des Kraftfahrzeugs und/oder des erfassten Verkehrsteilnehmers anzuzeigen.

Aus der US 2015 / 258928 A1, der DE 20 2017 103902 U1, der DE 10 2014 207399 A1, der DE 10 2017 200781 A und der DE 10 2016 204877 A1 ist jeweils ein Verfahren zum Betrieb eines selbstfahrenden Kraftfahrzeugs bekannt, bei dem ,Fahrtrichtungsinformationen repräsentativ für ein geplantes Fahrmanöver des Kraftfahrzeugs eingelesen werden, ein Verkehrsteilnehmer im Wegebereich des geplanten Fahrmanövers unter Auswertung zumindest der Fahrtrichtungsinformationen erfasst wird, ein Leuchtenansteuerdatensatz zum Ansteuern zumindest einer als Frontscheinwerfer ausgebildeten Leuchte des Kraftfahrzeugs unter Auswertung zumindest der Fahrtrichtungsinformationen bestimmt wird, wenn ein Verkehrsteilnehmer im Wegebereich erfasst wurde, und die Leuchte gemäß dem Leuchtenansteuerdatensatz angesteuert wird.

Aus der DE 20 2018 004776 A1 ein Tagwarnlicht bekannt. Das Tagwarnlicht kann ein Gefahrenkennzeichen, ein Strichmännchen, ein Radfahrer, eine geänderte Geometrie oder auch als Traktor ausgebildet sein.

Es besteht also Bedarf daran, Wege aufzuzeigen, wie andere Verkehrsteilnehmer, wie z.B. Fußgänger, über geplante Fahrmanöver des selbstfahrenden Kraftfahrzeugs informiert werden können.

Die Aufgabe der Erfindung wird gelöst durch ein Verfahren zum Betrieb eines selbstfahrenden Kraftfahrzeugs, mit den Schritten:
Einlesen von Fahrtrichtungsinformationen repräsentativ für ein geplantes Fahrmanöver des Kraftfahrzeugs,
Erfassen von zumindest einem Verkehrsteilnehmer im Wegebereich des geplanten Fahrmanövers unter Auswertung zumindest der Fahrtrichtungsinform ationen,
Bestimmen von einem Leuchtenansteuerdatensatz zum Ansteuern zumindest einer Leuchte des Kraftfahrzeugs, die als Frontscheinwerfer mit einem Tagfahrlicht ausgebildet ist, unter Auswertung zumindest der Fahrtrichtungsinformationen, wenn ein Verkehrsteilnehmer im Wegebereich erfasst wurde, und
Ansteuern der Leuchte gemäß dem Leuchtenansteuerdatensatz, wobei mit dem Leuchtenansteuerdatensatz ein Wechsel zu einem Betrieb des Tagfahrlichts der Leuchte mit erhöhter Leuchtstärke bewirkt wird, wenn ein Verkehrsteilnehmer (8) im Wegebereich erfasst wurde.

Die als Frontscheinwerfer ausgebildete Leuchte kann eine Mehrzahl von einzeln ansteuerbaren Leuchtmitteln, wie z.B. LEDs aufweisen, die mit dem Leuchtenansteuerdatensatz einzeln und/oder gruppenweise und/oder alle zusammen ansteuerbar sind. Die als Frontscheinwerfer ausgebildete Leuchte befindet sich an der Fahrzeugfront und strahlt Licht grundsätzlich in Vorwärtsfahrtrichtung des Kraftfahrzeugs ab. Im Rahmen des Bestimmens des Leuchtenansteuerdatensatz werden die erfassten Fahrtrichtungsinformationen gemäß einem vorbestimmten Code codiert. Es werden also durch das Ansteuern der Leuchte gemäß dem Leuchtenansteuerdatensatz kodierte Fahrtrichtungsinformationen über ein geplantes Fahrmanöver des Kraftfahrzeugs wiedergegeben. So werden andere Verkehrsteilnehmer, wie z.B. Fußgänger, über geplante Fahrmanöver des selbstfahrenden Kraftfahrzeugs informiert. Dadurch, dass erfasst wird, wenn sich ein Verkehrsteilnehmer im Wegebereich des geplanten Fahrmanövers befindet und nur dann der Leuchtenansteuerdatensatz erzeugt wird, wird vermieden, dass auf unbeteiligte Verkehrsteilnehmer reagiert wird. So können andere Verkehrsteilnehmer, wie z.B. Fußgänger, bedarfsgerecht über geplante Fahrmanöver des selbstfahrenden Kraftfahrzeugs informiert werden, ohne dass hierzu zusätzliche Leuchteinrichtungen, wie weitere Leuchten, notwendig sind.

Es wird die Leuchtstärke ausgehend von einem ersten Wert auf einen zweiten Wert angehoben, wobei der erste Wert indikativ für eine Normalbetriebsleuchtstärke ist und der zweite Wert indikativ für eine Leuchtstärke ist, die größer als die Normalbetriebsleuchtstärke ist. So können besonders leicht einfach von anderen Verkehrsteilnehmern, wie z.B. von Fußgängern, wahrnehmbare Warnsignale erzeugt werden

Unter einem Tagfahrlicht wird eine Fahrzeugbeleuchtung verstanden, die die Sichtbarkeit des Kraftfahrzeugs am Tage für andere Verkehrsteilnehmer verbessern und so Unfälle durch Übersehen werden verringern soll. Das Tagfahrlicht kann von Tagfahrleuchten bereitgestellt werden. Derartige Tagfahrleuchten sind lichtschwache, verbrauchsarme und langlebige Leuchten, die weniger Leuchtkraft haben als das Abblendlicht, aber viermal so intensiv leuchten wie die vorderen weißen Umrissleuchten (das ist oft auch das Standlicht). Die technische Norm Nr. 87 der UNO-Wirtschaftskommission für Europa (ECE) sieht für Tagfahrleuchten eine Lichtstärke von mindestens 400 Candela pro Leuchte vor. Das Tagfahrlicht wird mit Inbetriebnahme des Kraftfahrzeugs automatisch aktiviert und mit einer vorbestimmten Normalbetriebsleuchtstärke bereitgestellt. Wird ein Verkehrsteilnehmer im Wegebereich erfasst erfolgt ein Wechsel zu einer Leuchtstärke, die größer als die Normalbetriebsleuchtstärke ist. Somit erfolgt eine Doppelnutzung des Tagfahrlichts, nämlich als eigentliches Tagfahrlicht und zum Erzeugen von Warnhinweisen.

Gemäß einer Ausführungsform wird mit dem Leuchtenansteuerdatensatz eine Leuchtstärke vorgegeben. Die z.B. einzeln ansteuerbaren Leuchtmittel der Leuchte können also Licht unterschiedlicher Leuchtstärke abgeben. So können z.B. Warnsignale für andere Verkehrsteilnehmer, wie z.B. Fußgänger, erzeugt werden.

Gemäß einer weiteren Ausführungsform wird mit dem Leuchtenansteuerdatensatz eine Leuchtfolge vorgegeben. Die z.B. einzeln ansteuerbaren Leuchtmittel der Leuchte können einzeln und/oder gruppenweise in einer zeitlich vorbestimmten Reihenfolge aktiviert werden. Derartige, zeitlich variable Leuchtfolgen können besonders einfach von anderen Verkehrsteilnehmern, wie z.B. Fußgängern, wahrgenommen werden.

Gemäß einer weiteren Ausführungsform wird mit dem Leuchtenansteuerdatensatz eine Leuchtrichtung vorgegeben. Die z.B. einzeln ansteuerbaren Leuchtmittel der Leuchte können einzeln und/oder gruppenweise in einer zeitlich vorbestimmten Reihenfolge aktiviert werden. Dabei können die einzelnen Leuchtmittel unterschiedliche Ausrichtungen aufweisen, d.h. sie emittieren Licht in unterschiedliche Richtungen. So kann eine Position eines erfassten Verkehrsteilnehmers, wie z.B. eines Fußgängers, berücksichtigt werden, indem z.B. Licht in Richtung des erfassten Verkehrsteilnehmers, wie z.B. des Fußgängers, emittiert wird. So kann die Wahrnehmbarkeit nochmals verbessert werden.

Gemäß einer weiteren Ausführungsform wird mit dem Leuchtenansteuerdatensatz eine Leuchtfarbe vorgegeben. Die z.B. einzeln ansteuerbaren Leuchtmittel der Leuchte können einzeln und/oder gruppenweise in Lichtausbreitungsrichtung hinter einer farbigen Linse angeordnet sein, während andere der ansteuerbaren Leuchtmittel sich hinter einer nicht eingefärbten Linse befinden. Durch das Aktivieren der ansteuerbaren Leuchtmittel hinter der farbigen Linse kann die Leuchtfarbe verändert werden. So kann die Wahrnehmbarkeit ebenfalls nochmals verbessert werden.

Ferner gehören zur Erfindung ein Computerprogrammprodukt und ein Steuergerät.

Es wird nun die Erfindung anhand einer Zeichnung erläutert. Es zeigen:
Figur 1 in schematischer Darstellung eine Vorderansicht eines Kraftfahrzeugs.
Figur 2 in schematischer Darstellung ein Verkehrsszenario mit einem weiteren Verkehrsteilnehmer.
Figur 3 in schematischer Darstellung ein weiteres Verkehrsszenario mit einem weiteren Verkehrsteilnehmer.
Figur 4 in schematischer Darstellung eine Leuchte des in Figur 1 gezeigten Kraftfahrzeugs.
Figur 5 in schematischer Darstellung einen Verfahrensablauf zum Betrieb der in den Figuren 1 bis 3 gezeigten Kraftfahrzeuge.

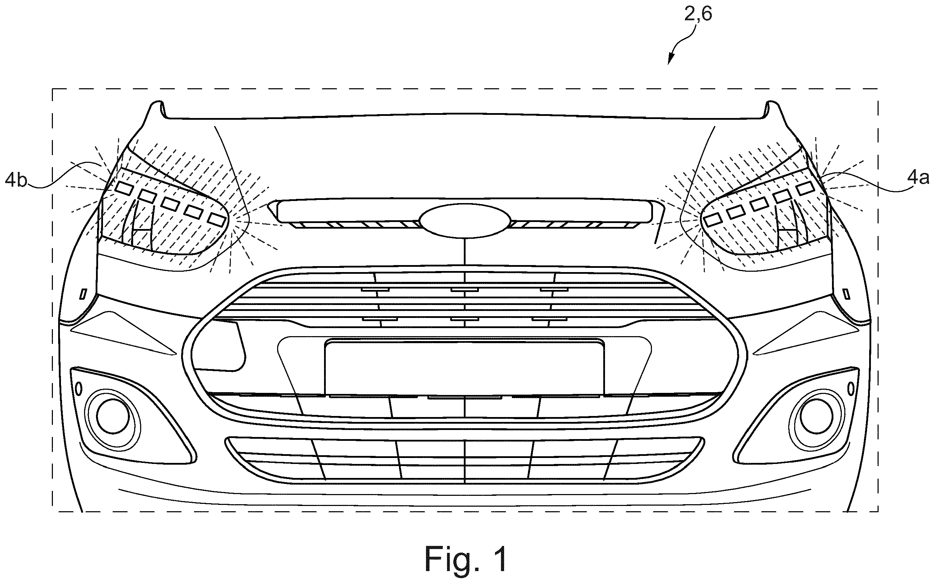

Es wird zunächst auf Figur 1 Bezug genommen.

Dargestellt ist ein Kraftfahrzeug 2, das im vorliegenden Ausführungsbeispiel als PKW ausgebildet ist. Ferner ist das Kraftfahrzeug 2 im vorliegenden Ausführungsbeispiel als selbstfahrendes Kraftfahrzeug ausgebildet, das ohne Einflussnahme eines menschlichen Fahrers fahren, steuern und einparken kann. Hierzu weist das Kraftfahrzeug 2 verschiedene Umfeldsensoren zur Umgebungserfassung auf und kann aus den gewonnenen Informationen seine Position und die anderer Verkehrsteilnehmer bestimmen, in Zusammenarbeit mit einer Navigationssoftware ein Fahrziel ansteuern und Kollisionen auf dem Weg dorthin vermeiden.

Das Kraftfahrzeug 2 weist eine Fahrzeugbeleuchtung auf. Unter der Fahrzeugbeleuchtung werden lichttechnische Einrichtungen von Kraftfahrzeugen verstanden, die notwendig sind, um bei Dämmerung, Dunkelheit oder bei schlechten Witterungsverhältnissen gesehen zu werden.

Die Fahrzeugbeleuchtung weist im vorliegenden Ausführungsbeispiel wie bei mehrspurigen Kraftfahrzeugen 2 üblich zwei Leuchten 4a, 4b auf. Abweichend vom vorliegenden Ausführungsbeispiel kann das Kraftfahrzeug 2 auch einspurig ausgebildet sein und dann wie üblich nur eine Leuchte 4a, 4b aufweisen

Die Leuchten 4a, 4b sind als Frontscheinwerfer ausgebildet, d.h. sie befinden sich an der Fahrzeugfront des Kraftfahrzeugs 2 und strahlen Licht grundsätzlich in Vorwärtsfahrtrichtung des Kraftfahrzeugs 2 ab.

Im vorliegenden Ausführungsbeispiel stellen die Leuchten 4a, 4b ein Fernlicht, ein Abblendlicht, ein Standlicht sowie ein Tagfahrlicht bereit. Dabei wird unter einem Tagfahrlicht eine Fahrzeugbeleuchtung verstanden, die die Sichtbarkeit des Kraftfahrzeugs am Tage für andere Verkehrsteilnehmer verbessern und so Unfälle durch Übersehen werden verringern soll. Das Tagfahrlicht kann von Tagfahrleuchten bereitgestellt werden. Derartige Tagfahrleuchten sind lichtschwache, verbrauchsarme und langlebige Leuchten, die weniger Leuchtkraft haben als das Abblendlicht, aber viermal so intensiv leuchten wie die vorderen weißen Umrissleuchten (das ist oft auch das Standlicht). Die technische Norm Nr. 87 der UNO-Wirtschaftskommission für Europa (ECE) sieht für Tagfahrleuchten eine Lichtstärke von mindestens 400 Candela pro Leuchte vor. Zusätzlich kann die Fahrzeugbeleuchtung auch ein Parklicht und/oder ein Kurvenlicht bereitstellen sowie und/oder Nebelscheinwerfer aufweisen. In der in Figur 1 gezeigten Darstellung stellen die Leuchten 4a, 4b ein Tagfahrlicht mit einer reduzierten Leuchtstärke bereit.

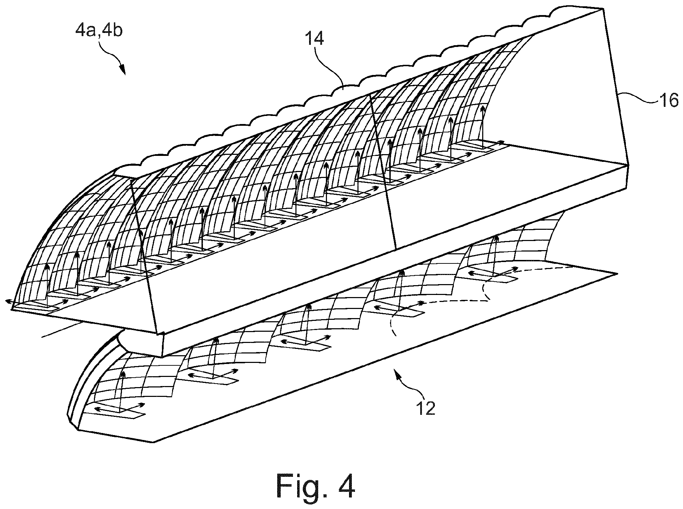

Die Leuchten 4a, 4b weisen jeweils eine Mehrzahl von einzeln ansteuerbaren Leuchtmittel 12 (siehe Figur 4) auf, die - wie dies später noch detailliert erläutert wird - einzeln und/oder gruppenweise und/oder alle zusammen ansteuerbar sind. Bei den Leuchtmitteln 12 handelt es sich im vorliegenden Ausführungsbeispiel um LEDs. Mit anderen Worten, die Leuchten 4a, 4b sind im vorliegenden Ausführungsbeispiel jeweils als elektrisch gesteuerte LED-Scheinwerfer (auch Matrix-LED-Scheinwerfer) ausgebildet, die von einem Steuergerät 6 angesteuert werden. Hierzu und für die nachfolgend beschriebenen Aufgaben und/oder Funktionen kann das Steuergerät 6 Hard- und/oder Software-Komponenten aufweisen.

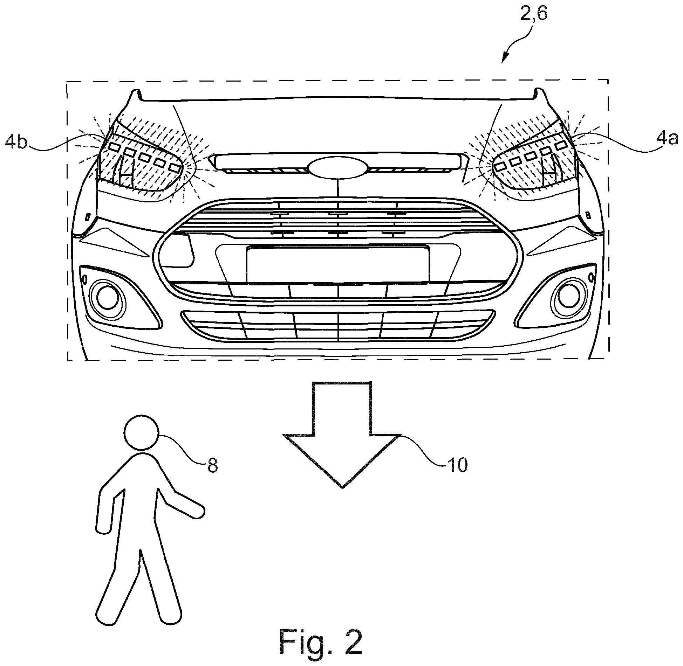

Es wird nun zusätzlich auf Figur 2 Bezug genommen.

Dargestellt ist ein Verkehrsszenario, in dem ein Verkehrsteilnehmer 8, im vorliegenden Ausführungsbeispiel ein Fußgänger, einen Wegebereich 10 eines geplanten Fahrmanövers des Kraftfahrzeugs 2 kreuzt.

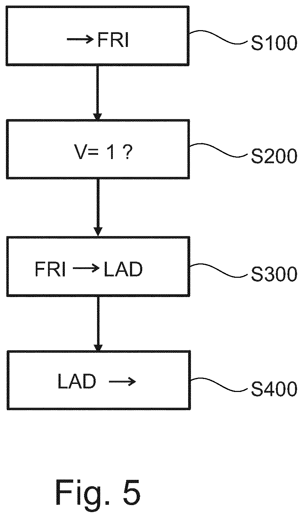

Das Steuergerät 6 ist dazu ausgebildet, Fahrtrichtungsinformationen FRI (siehe Figur 5) repräsentativ für ein geplantes Fahrmanöver des Kraftfahrzeugs 2 einzulesen und den Wegebereich 10 zu bestimmen. Des Weiteren ist das Steuergerät 6 dazu ausgebildet, Sensordaten der Umfeldsensoren auszuwerten, um zu bestimmen, ob sich der Verkehrsteilnehmer 8 in dem Wegebereich 10 befindet.

Wenn ein Verkehrsteilnehmer 8 im Wegebereich 10 erfasst wurde bestimmt das Steuergerät 6 einen Leuchtenansteuerdatensatz LAD (siehe Figur 5) zum Ansteuern einer oder beider Leuchten 4a, 4b des Kraftfahrzeugs 2 zumindest unter Auswertung der Fahrtrichtungsinformationen FRI.

Dabei werden im Rahmen des Bestimmens des Leuchtenansteuerdatensatz LAD die eingelesenen Fahrtrichtungsinformationen FRI gemäß einem vorbestimmten Code codiert. Mit anderen Worten, der Leuchtenansteuerdatensatz LAD enthält Informationen repräsentativ für das geplante Fahrmanöver des Kraftfahrzeugs 2, bei dem es sich durch den Wegebereich 10 bewegen wird.

Das Steuergerät 6 steuert dann die Leuchten 4a, 4b gemäß dem Leuchtenansteuerdatensatz LAD an. Es werden also durch das Ansteuern der Leuchten 4a, 4b gemäß dem Leuchtenansteuerdatensatz LAD kodierte Fahrtrichtungsinformationen FRI über das geplante Fahrmanöver des Kraftfahrzeugs 2 wiedergegeben.

Die kodierten Fahrtrichtungsinformationen FRI können z.B. wiedergegeben werden, in dem eine Leuchtstärke der Leuchten 4a, 4b verändert wird. Die z.B. einzeln ansteuerbaren Leuchtmittel 12 der Leuchten 4a, 4b können also Licht unterschiedlicher Leuchtstärke abgeben. Es kann z.B. vorgesehen sein, wie in Figur 2 dargestellt, alle Leuchtmittel 12 zusammen mit einer maximalen Leuchtstärke zu betreiben, wenn ein Verkehrsteilnehmer 8 im Wegebereich 10 erfasst wurde um so den Verkehrsteilnehmer 8 darüber zu informieren, dass er sich in einem Gefahrenbereich befindet. Befindet sich hingegen kein Verkehrsteilnehmer 8 im Wegebereich 10 werden die Leuchtmittel 12 z.B. als Tagfahrlicht mit einer reduzierten Leuchtstärke betrieben.

Zusätzlich können die kodierten Fahrtrichtungsinformationen FRI z.B. wiedergegeben werden, in dem eine Leuchtfolge der Leuchten 4a, 4b verändert wird. Hierzu werden die Leuchtmittel 12 der Leuchten 4a, 4b einzeln und/oder gruppenweise in einer zeitlich vorbestimmten Reihenfolge aktiviert. So können z.B. Richtungsinformationen über das geplante Fahrmanöver gemäß den Fahrtrichtungsinformationen FRI wiedergegeben werden. Z.B. kann eine von rechts nach links verlaufende Leuchtfolge ein Linksabbiegen symbolisieren. Auch können Leuchtfolgen z.B. einen Stillstand des Kraftfahrzeugs 2 symbolisieren.

Zusätzlich können die kodierten Fahrtrichtungsinformationen FRI z.B. wiedergegeben werden, in dem eine Leuchtrichtung der Leuchten 4a, 4b verändert wird. Die Leuchtmittel 12 der Leuchten 4a, 4b werden hierzu einzeln und/oder gruppenweise in einer zeitlich vorbestimmten Reihenfolge aktiviert. Einzelne Leuchtmittel 12 weisen dabei unterschiedliche Ausrichtungen auf, d.h. sie emittieren Licht in unterschiedliche Richtungen. So kann eine Position des erfassten Verkehrsteilnehmers 8, berücksichtigt werden, indem Licht in Richtung des erfassten Verkehrsteilnehmers 8 emittiert wird. Es können aber auch so z.B. Richtungsinformationen über das geplante Fahrmanöver gemäß den Fahrtrichtungsinformationen FRI wiedergegeben werden.

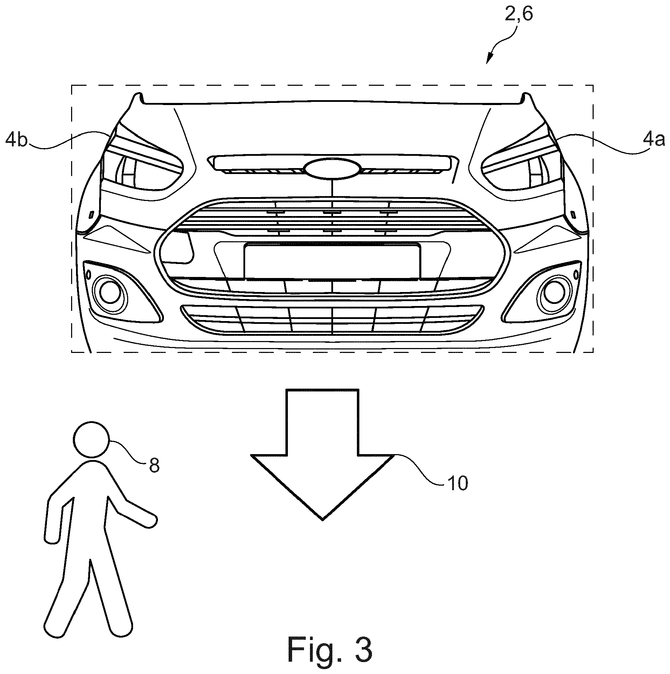

Es wird nun zusätzlich auf Figur 3 Bezug genommen.

Zusätzlich können die kodierten Fahrtrichtungsinformationen FRI z.B. wiedergegeben werden, in dem eine Leuchtfarbe der Leuchten 4a, 4b verändert wird.

Es wird nun zusätzlich auf Figur 4 Bezug genommen, um den Aufbau der Leuchte 4a, 4b zu erläutern.

Dargestellt sind die Leuchten 4a, 4b. Sie weisen eine Mehrzahl von Leuchtmitteln 12 auf, die im vorliegenden Ausführungsbeispiel LEDs sind.

Den Leuchtmitteln 12 sind Reflektoren 14 zugeordnet, die eine Lichtumlenkung und Strahlaufweitung des von den jeweiligen Leuchtmitteln 12 emittierten Lichts bewirken.

In Lichtausbreitungsrichtung hinter den Reflektoren 14 ist eine Linse 16 angeordnet, die aus einem optisch durchlässigen, aber eingefärbten Material besteht. Im vorliegenden Ausführungsbeispiel ist das Material Türkis eingefärbt, so dass durch die Linse 16 hindurchtretendes Licht Türkis eingefärbt wird. So kann durch Aktivieren der Leuchtmittel 12 hinter der farbigen Linse 16 die Leuchtfarbe verändert werden.

Es wird nun unter zusätzlicher Bezugnahme auf die Figur 5 ein Verfahrensablauf zum Betrieb des Kraftfahrzeugs 2 erläutert.

Das Tagfahrlicht wird mit Inbetriebnahme des Kraftfahrzeugs 2 automatisch aktiviert und im vorliegenden Ausführungsbeispiel mit einer vorbestimmten Normalbetriebsleuchtstärke bereitgestellt.

In einem ersten Schritt S100 liest das Steuergerät 6 die Fahrtrichtungsinformationen FRI repräsentativ für das geplante Fahrmanöver des Kraftfahrzeugs 2 ein. Basierend auf den Fahrtrichtungsinformationen FRI wird der Wegebereich 10 bestimmt.

In einem weiteren Schritt S200 wird durch Auswerten von Sensordaten der Umfeldsensoren des Kraftfahrzeugs 2 bestimmt, ob sich der Verkehrsteilnehmer 8 in dem Wegebereich 10 befindet, durch den sich das Kraftfahrzeug 2 gemäß dem geplanten Fahrmanöver bewegen wird. Wenn sich der Verkehrsteilnehmer 8 in dem Wegebereich 10 befindet wird einer logischen Variablen V der Wert logisch Eins zugewiesen. Andernfalls wird der logischen Variablen V der Wert logisch Null zugewiesen.

Das Steuergerät 6 liest die logische Variable V ein und bestimmt in einem weiteren Schritt S300 den Leuchtenansteuerdatensatz LAD zum Ansteuern der Leuchten 4a, 4b des Kraftfahrzeugs 2 wenn ein Verkehrsteilnehmer 8 im Wegebereich 10 erfasst wurde, d.h. die logische Variable V den Wert logisch Eins hat. Dabei wertet das Steuergerät 6 die Fahrtrichtungsinformationen FRI sowie gegebenenfalls eine erfasste Position des Verkehrsteilnehmers 8 aus um den Leuchtenansteuerdatensatz LAD zu bestimmen, mit dem die Leuchtstärke und/oder Leuchtfolge und/oder Leuchtrichtung und/oder Leuchtfarbe der Leuchten 4a, 4b bzw. deren Leuchtmittel 12 vorgegeben werden kann.

In einem weiteren Schritt S400 werden dann die Leuchten 4a, 4b bzw. deren Leuchtmittel 12 von dem Steuergerät 6 gemäß dem Leuchtenansteuerdatensatz LAD angesteuert.

Durch den Leuchtenansteuerdatensatz LAD wird nun ein Wechsel zu einem Betrieb mit erhöhter Leuchtstärke bewirkt. Hierbei wird die Leuchtstärke ausgehend von einem ersten Wert auf einen zweiten Wert angehoben, wobei der erste Wert indikativ für eine Normalbetriebsleuchtstärke ist und der zweite Wert indikativ für eine Leuchtstärke ist, die größer als die Normalbetriebsleuchtstärke ist. Mit anderen Worten, auf das Erfassen des Verkehrsteilnehmers 8 im Wegebereich 10 erfolgt im vorliegenden Ausführungsbeispiel ein Wechsel zu einer Leuchtstärke, die größer als die Normalbetriebsleuchtstärke ist.

Zusätzlich kann vorgesehen sein, dass der Leuchtenansteuerdatensatz LAD - wie schon beschreiben - eine Leuchtfolge und/oder eine Leuchtrichtung und/oder eine Leuchtfarbe vorgibt.

Abweichend vom vorliegenden Ausführungsbeispiel kann die Reihenfolge der Schritte auch eine andere sein. Ferner können mehrere Schritte auch zeitgleich bzw. simultan ausgeführt werden.

So können andere Verkehrsteilnehmer 8, wie z.B. Fußgänger, bedarfsgerecht über geplante Fahrmanöver des Kraftfahrzeugs 2 informiert werden, ohne dass hierzu zusätzliche Leuchteinrichtung, wie weitere Leuchten, notwendig sind.

### Bezugszeichenliste

- 2: Kraftfahrzeug
- 4a: Leuchte
- 4b: Leuchte
- 6: Steuergerät
- 8: Verkehrsteilnehmer
- 10: Wegebereich
- 12: Leuchtmittel
- 14: Reflektoren
- 16: Linse

- FRI: Fahrtrichtungsinformationen
- LAD: Leuchtenansteuerdatensatz
- V: logische Variable

## Patentansprüche

1. Verfahren zum Betrieb eines selbstfahrenden Kraftfahrzeugs (2), mit den Schritten:
(S100) Einlesen von Fahrtrichtungsinformationen (FRI) repräsentativ für ein geplantes Fahrmanöver des Kraftfahrzeugs (2),
(S200) Erfassen von zumindest einem Verkehrsteilnehmer (8) im Wegebereich (10) des geplanten Fahrmanövers unter Auswertung zumindest der Fahrtrichtungsinformationen (FRI),
(S300) Bestimmen von einem Leuchtenansteuerdatensatz (LAD) zum Ansteuern zumindest einer Leuchte (4a, 4b) des Kraftfahrzeugs (2), die als Frontscheinwerfer mit einem Tagfahrlicht ausgebildet ist, unter Auswertung zumindest der Fahrtrichtungsinformationen (FRI), wenn ein Verkehrsteilnehmer (8) im Wegebereich (10) erfasst wurde, und
(S400) Ansteuern der Leuchte (4a, 4b) gemäß dem Leuchtenansteuerdatensatz (LAD), **dadurch gekennzeichnet, dass** mit dem Leuchtenansteuerdatensatz (LAD) ein Wechsel zu einem Betrieb des Tagfahrlichts der Leuchte (4a, 4b) mit erhöhter Leuchtstärke bewirkt wird, wenn ein Verkehrsteilnehmer (8) im Wegebereich (10) erfasst wurde.

2. Verfahren nach Anspruch 1, wobei mit dem Leuchtenansteuerdatensatz (LAD) eine Leuchtstärke vorgegeben wird.

3. Verfahren nach Anspruch 1 oder 2, wobei mit dem Leuchtenansteuerdatensatz (LAD) eine Leuchtfolge vorgegeben wird.

4. Verfahren nach einem der Ansprüche 1 bis 3, wobei mit dem Leuchtenansteuerdatensatz (LAD) eine Leuchtrichtung vorgegeben wird.

5. Verfahren nach einem der Ansprüche 1 bis 4, wobei mit dem Leuchtenansteuerdatensatz (LAD) eine Leuchtfarbe vorgegeben wird.

6. Computerprogrammprodukt, umfassend Befehle, die bei der Ausführung des Programms durch einen Computer diesen veranlassen, das Verfahren nach einem der Ansprüche 1 bis 5 auszuführen.

7. Steuergerät (6) zum Betrieb eines selbstfahrenden Kraftfahrzeugs (2), wobei das Steuergerät (6) dazu ausgebildet ist Fahrtrichtungsinformationen (FRI) repräsentativ für ein geplantes Fahrmanöver des Kraftfahrzeugs (2) einzulesen, zumindest einem Verkehrsteilnehmer (8) im Wegebereich (10) des geplanten Fahrmanövers unter Auswertung zumindest der Fahrtrichtungsinformationen (FRI) zu erfassen, einen Leuchtenansteuerdatensatz (LAD) zum Ansteuern zumindest einer Leuchte (4a, 4b) des Kraftfahrzeugs, die als Frontscheinwerfer mit einem Tagfahrlicht ausgebildet ist, unter Auswertung zumindest der Fahrtrichtungsinformationen (FRI) zu bestimmen, wenn ein Verkehrsteilnehmer (8) im Wegebereich (10) erfasst wurde, und die Leuchte (4a, 4b) gemäß dem Leuchtenansteuerdatensatz (LAD) anzusteuern, **dadurch gekennzeichnet, dass** mit dem Leuchtenansteuerdatensatz (LAD) ein Wechsel zu einem Betrieb des Tagfahrlichts der Leuchte (4a, 4b) mit erhöhter Leuchtstärke bewirkt wird, wenn ein Verkehrsteilnehmer (8) im Wegebereich (10) erfasst wurde.

8. Steuergerät (6) nach Anspruch 7, wobei mit dem Leuchtenansteuerdatensatz (LAD) eine Leuchtstärke vorgebbar ist.

9. Steuergerät (6) nach Anspruch 7 oder 8, wobei mit dem Leuchtenansteuerdatensatz (LAD) eine Leuchtfolge vorgebbar ist

10. Steuergerät (6) nach einem der Ansprüche 7 bis 9, wobei mit dem Leuchtenansteuerdatensatz (LAD) eine Leuchtrichtung vorgebbar ist.

11. Steuergerät (6) nach einem der Ansprüche 7 bis 10, wobei mit dem Leuchtenansteuerdatensatz (LAD) eine Leuchtfarbe vorgebbar ist.

## Claims

1. Method for the operation of a self-driving motor vehicle (2), having the steps of:
(S100) reading travel direction information (FRI) representing a planned driving manoeuvre of the motor vehicle (2),
(S200) capturing at least one road user (8) in the path region (10) of the planned driving manoeuvre with the evaluation of at least the travel direction information (FRI),
(S300) determining a lamp control data set (LAD) for controlling at least one lamp (4a, 4b) of the motor vehicle (2), which is embodied in the form of a front headlight with a daytime running light, with the evaluation of at least the travel direction information (FRI) if a road user (8) has been captured in the path region (10), and
(S400) controlling the lamp (4a, 4b) in accordance with the lamp control data set (LAD), **characterized in that** the lamp control data set (LAD) effects a switch to operation of the daytime running light of the lamp (4a, 4b) with an increased luminous intensity if a road user (8) has been captured in the path region (10).

2. Method according to Claim 1, wherein a luminous intensity is specified by the lamp control data set (LAD) .

3. Method according to Claim 1 or 2, wherein a lighting sequence is specified by the lamp control data set (LAD).

4. Method according to one of Claims 1 to 3, wherein a lighting direction is specified by the lamp control data set (LAD).

5. Method according to one of Claims 1 to 4, wherein a lighting colour is specified by the lamp control data set (LAD).

6. Computer program product, comprising commands that cause a computer to perform, upon execution of the program by the computer, the method according to one of Claims 1 to 5.

7. Control device (6) for the operation of a self-driving motor vehicle (2), wherein the control device (6) is designed to read travel direction information (FRI) representing a planned driving manoeuvre of the motor vehicle (2), to capture at least one road user (8) in the path region (10) of the planned driving manoeuvre with the evaluation of at least the travel direction information (FRI), to determine a lamp control data set (LAD) for controlling at least one lamp (4a, 4b) of the motor vehicle, which is embodied in the form of a front headlight with a daytime running light, with the evaluation of at least the travel direction information (FRI) if a road user (8) has been captured in the path region (10), and to control the lamp (4a, 4b) in accordance with the lamp control data set (LAD), **characterized in that** the lamp control data set (LAD) effects a switch to operation of the daytime running light of the lamp (4a, 4b) with an increased luminous intensity if a road user (8) has been captured in the path region (10).

8. Control device (6) according to Claim 7, wherein a luminous intensity is specifiable by the lamp control data set (LAD).

9. Control device (6) according to Claim 7 or 8, wherein a lighting sequence is specifiable by the lamp control data set (LAD).

10. Control device (6) according to one of Claims 7 to 9, wherein a lighting direction is specifiable by the lamp control data set (LAD).

11. Control device (6) according to one of Claims 7 to 10, wherein a lighting colour is specifiable by the lamp control data set (LAD).

## Revendications

1. Procédé de conduite d'un véhicule automobile (2) autonome, le procédé comprenant les étapes qui consistent à :
(S100) saisir des informations (FRI) sur la direction de déplacement représentatives d'une manoeuvre planifiée de conduite du véhicule automobile (2),
(S200) saisir au moins un participant (8) au trafic présent dans la zone (10) traversée par la manoeuvre planifiée de conduite et évaluer au moins les informations (FRI) sur la direction de déplacement,
(S300) déterminer un jeu (LAD) de données de commande des phares pour commander au moins un phare (4a, 4b) du véhicule automobile (2) configuré comme phare frontal éclairant pendant le jour et évaluer au moins les informations (FRI) sur la direction de déplacement si un participant (8) au trafic a été détecté dans la zone (10) et
(S400) commander les phares (4a, 4b) en fonction du jeu (LAD) de données de commande des phares,
**caractérisé en ce que**
un basculement vers un fonctionnement des phares (4a, 4b) en lumière du jour à intensité d'éclairage accrue est réalisé avec le jeu (LAD) de données de commande des phares si un participant (8) au trafic a été détecté dans la zone (10).

2. Procédé selon la revendication 1, dans lequel une intensité d'éclairage est prédéterminée par le jeu (LAD) de données de commande des phares.

3. Procédé selon les revendications 1 ou 2, dans lequel une séquence d'éclairage par les phares est prédéterminée par le jeu (LAD) de données de commande des phares.

4. Procédé selon les revendications 1 à 3, dans lequel une direction d'éclairage par les phares est prédéterminée par le jeu (LAD) de données de commande des phares.

5. Procédé selon les revendications 1 à 4, dans lequel une couleur d'éclairage par les phares est prédéterminée par le jeu (LAD) de données de commande des phares.

6. Produit de programme informatique comprenant des instructions qui, lorsqu'elles sont exécutées sur un ordinateur, permettent à ce dernier de mettre en oeuvre le procédé selon l'une des revendications 1 à 5.

7. Appareil (6) de commande de la conduite d'un véhicule automobile (2) autonome, l'appareil de commande (6) étant configuré pour
lire des informations (FRI) sur la direction de déplacement représentatives d'une manoeuvre planifiée de conduite du véhicule automobile (2),
saisir au moins un participant (8) au trafic présent dans la zone (10) traversée par la manoeuvre planifiée de conduite,
évaluer au moins les informations (FRI) sur la direction de déplacement,
déterminer un jeu (LAD) de données de commande des phares pour commander au moins un phare (4a, 4b) du véhicule automobile (2) configuré comme phare frontal éclairant pendant le jour et évaluer au moins les informations (FRI) sur la direction de déplacement si un participant (8) au trafic a été détecté dans la zone (10), et
commander les phares (4a, 4b) en fonction du jeu (LAD) de données de commande des phares,
**caractérisé en ce que**
un basculement vers un fonctionnement des phares (4a, 4b) en lumière du jour à intensité d'éclairage renforcée est réalisé avec le jeu (LAD) de données de commande des phares si un participant (8) au trafic a été détecté dans la zone (10).

8. Appareil de commande (6) selon la revendication 7, dans lequel une intensité d'éclairage peut être prédéterminée par le jeu (LAD) de données de commande des phares.

9. Appareil de commande (6) selon les revendications 7 ou 8, dans lequel une séquence d'éclairage par les phares peut être prédéterminée par le jeu (LAD) de données de commande des phares.

10. Appareil de commande (6) selon les revendications 7 à 9, dans lequel une direction d'éclairage par les phares peut être prédéterminée par le jeu (LAD) de données de commande des phares.

11. Appareil de commande (6) selon les revendications 7 à 10, dans lequel une couleur d'éclairage par les phares peut être prédéterminée par le jeu (LAD) de données de commande des phares.
